# EUROPÄISCHE PATENTANMELDUNG

(11) **EP 1 700 538 A2**
(43) Veröffentlichungstag der Anmeldung: **13.09.2006**
(21) Anmeldenummer: 06002221.7
(22) Anmeldetag: 03.02.2006
(51) Int. Cl.: A47B 1/02, A47B 13/06, F16B 12/52

(54) **Tisch**

(30) Priorität: 07.03.2005 DE 202005003595 U
(71) Anmelder: Rosenthal AG, 95100 Selb (DE)
(72) Erfinder: Vogtherr, Burkhard, 68100 Mulhouse (FR)
(74) Vertreter: Ostertag, Reinhard

(57) **Zusammenfassung**

Ein Tisch (10) hat eine niedere Zarge (16), welche einen Stauraum (62) begrenzt. Der Stauraum (62) ist von oben dadurch zugänglich, daß eine Tischplatteneinheit (14) mindestens ein Plattensegment (44, 46) aufweist, welches in einer den Zugang zum Stauraum (62) freigebende Stellung bewegbar ist.

## Beschreibung

Die Erfindung betrifft einen Tisch gemäß dem Oberbegriff des Anspruches 1.

Derartige Tische sind in unterschiedlicher Ausführungsform auf dem Markt. Darunter befinden sich auch Tische, welche mit einer Schublade versehen sind.

Derartige Tische mit Schublade haben aber eine verhältnismäßig hohe Zarge und der Zugang zum Inneren der Schublade ist dann, wenn man am Tisch sitzt, nur unter Schwierigkeiten gegeben.

Durch die vorliegende Erfindung soll ein Tisch gemäß dem Oberbegriff des Anspruches 1 so weitergebildet werden, daß er bei niederer Ausgestaltung der Zarge das Verstauen von Papieren oder anderen Gegenständen auch dann ermöglicht, wenn man vor dem Tisch sitzt bzw. steht.

Diese Aufgabe ist erfindungsgemäß gelöst durch einen Tisch mit den im Anspruch 1 angegebenen Merkmalen.

Bei dem erfindungsgemäßen Tisch besteht ein Zugang zu dem durch die Zarge begrenzten Ablageraum von oben her, und dieser Zugang ist auch leicht nutzbar, wenn man vor dem Tisch sitzt oder steht.

Vorteilhafte Weiterbildungen der Erfindung sind in Unteransprüchen angegeben.

Bei einem Tisch gemäß Anspruch 2 kann man den Zugang zum im Inneren der Zarge liegenden Ablageraum auch dann einfach öffnen, wenn sich auf dem bewegbaren Plattensegment noch Gegenstände befinden. Man braucht also den Tisch nicht abzuräumen, um Zugang zum Ablageraum zu haben.

Mit der Weiterbildung der Erfindung gemäß Anspruch 3 wird erreicht, daß das Öffnen des Ablageraumes wahlweise nach einer von zwei Seiten zu bewerkstelligen ist. Auch kann man die Größe der Gesamtöffnung auf zwei kleinere Bewegungen der beiden Plattensegmente verteilen.

Mit der Weiterbildung der Erfindung gemäß Anspruch 4 wird erreicht, daß mit dem Bewegen eines der beiden bewegbaren Plattensegmente zwangsläufig zugleich auch das andere bewegt wird. Man kann somit mit einer einzigen Bewegung die Gesamtöffnung durch kleinere Teilbewegungen der beiden Plattensegmente herstellen.

Dabei wird gemäß Anspruch 5 die gesamte Öffnungsbewegung symmetrisch auf die beiden Plattensegmente verteilt.

Die Weiterbildung der Erfindung gemäß Anspruch 6 hat den Vorteil, daß man ohne Änderung der lichten Randkontur der Tischplatteneinheit eine große Zugangsöffnung zu dem Ablageraum der Zarge realisieren kann.

Dabei ist die im Anspruch 7 angegebene Weiterbildung einerseits im Hinblick auf die Ästhetik des Tisches, andererseits im Hinblick auf einfache Bedienung des verschwenkbaren Plattensegmentes von Vorteil.

Bei einem Tisch gemäß Anspruch 8 kann man verschiedene Teilbereiche des Ablageraumes der Zarge von der gleichen Stellung des Benutzers aus erreichen, da die durch die verschwenkbaren Plattensegmente freigegebenen Öffnungen alle in der gleichen Richtung zugänglich sind.

Die Weiterbildung der Erfindung gemäß Anspruch 9 ist im Hinblick auf ein optisch leichtes und gefälliges Aussehen des Tisches von Vorteil. Darüber hinaus ist es möglich, die Zarge auch etwas höher zu bauen, ohne daß der Oberschenkel von am Tisch sitzenden Personen mit einer Kante der Zarge in Berührung kommt.

Die Weiterbildung der Erfindung gemäß Anspruch 10 dient einer einfachen, kostengünstigen und hohe Oberflächenqualität aufweisenden Realisierung der Zarge.

Bei einem Tisch gemäß Anspruch 11 hat man eine hohe mechanische Belastbarkeit der Zarge bei geringem Gewicht.

Bei einem Tisch gemäß Anspruch 12 ist die Unterseite der Zarge durch eine Bodenplatte bündig verschlossen. Die Unterseite der Tischplatteneinheit ist somit glattflächig und dicht verschlossen.

Bei einem Tisch gemäß Anspruch 14 erfolgt die Verbindung von Ablagewanne und Zarge durch das Gewicht der Ablagewanne. Die Ablagewanne kann somit auch leichter aus der Zarge herausgehoben werden, um sie durch eine andere Ablagewanne unterschiedlicher Dimension zu ersetzen oder den Inhalt der Ablagewanne neu zu ordnen oder die Ablagewanne zu reinigen.

Die Weiterbildung der Erfindung gemäß Anspruch 15 ist im Hinblick auf eine kippsichere Befestigung der Füße an der Zarge bei gefälligen Aussehen der Eckabschnitte des Tisches von Vorteil.

Mit der Weiterbildung der Erfindung gemäß Anspruch 16 erhält man eine einstückig handhabbare Zarge, an welcher die Füße lösbar befestigt werden können. Dies ist im Hinblick auf ein Transportieren und platzsparendes Lagern des Tisches von Vorteil.

Nachstehend wird die Erfindung anhand von Ausführungsbeispielen und Bezugnahme auf die Zeichnung näher erläutert. In dieser zeigen:
- Figur 1: eine perspektivische Ansicht eines Schreibtisches, der in einem mittleren Abschnitt einen von oben zugänglichen Ablageraum aufweist, gezeigt im geschlossenen Zustand;
- Figur 2: eine ähnliche Ansicht wie Figur 1, in welcher der Schreibtisch bei freigegebenem Ablageraum gezeigt ist;
- Figur 3: eine Explosionsdarstellung des in den Figuren 1 und 2 gezeigten Tisches;
- Figur 4: eine ähnliche Ansicht wie Figur 2, wobei der dort gezeigte Ablageraum durch eine Ablagewanne größerer Tiefe ersetzt ist;
- Figur 5: eine perspektivische Darstellung von Ablageeinheiten, die alternativ in den mittleren Abschnitt des Tisches nach den Figuren 1 bis 3 einsetzbar sind;
- Figur 6: eine Aufsicht auf die eine Hälfte des in den vorstehenden Figuren gezeigten Tisches bei abgenommenen Plattensegmenten der Tischplatte und diese tragenden Beschlagteilen in vergrößertem Maßstabe;
- Figur 7: einen transversalen Schnitt durch einen Holm der Zarge des in den Figuren 1 bis 5 gezeigten Tisches und seine Tischplatteneinheit in nochmals vergrößertem Maßstabe längs der Schnittlinie A-A von Figur 6;
- Figur 8: eine perspektivische Ansicht eines Stehpultes mit verschwenkbarer Pultplatte, gezeigt in geschlossenem Zustand;
- Figur 9: das Stehpult nach Figur 7 mit geöffneter Pultplatte;
- Figur 10: eine perspektivische Ansicht eines Steh-Arbeitsplatzes, dessen Tischplatte ein verschwenkbares Plattensegment aufweist, gezeigt im geschlossenen Zustand;
- Figur 11: eine ähnliche Ansicht wie Figur 10, wobei das verschwenkbare Plattensegment geöffnet wiedergegeben ist;
- Figur 12: eine perspektivische Ansicht eines Schreibtisches mit zwei integrierten Ablageräumen für Papier oder dergleichen, gezeigt im geschlossenen Zustand;
- Figur 13: eine ähnliche Ansicht wie Figur 12, wobei jedoch ein verschwenkbares Plattensegment der Tischplatte, über welches ein Zugang zum rechten Ablageraum möglich ist, in geöffnetem Zustand wiedergegeben ist;
- Figur 14: eine perspektivische Ansicht eines Schreibtisches, bei welchem ein vom Benutzer abgewandter Abschnitt der Tischplatte als verschwenkbares Plattensegment ausgebildet ist, über welches ein Zugang zu einem sich über die gesamte Breite des Schreibtisches erstreckenden Ablagefach gegeben ist;
- Figur 15: eine ähnliche Ansicht wie Figur 14, wobei das Ablagefach in drei Abteile unterteilt ist;
- Figur 16: eine perspektivische Ansicht eines Schreibtisches, dessen Zarge im rechts gelegenen Teil zwei Ablageräume begrenzt, die über zwei verschwenkbare Plattensegmente zugänglich sind,
- Figur 17: eine perspektivische Ansicht eines Schreibtisches, bei welchem ein dem Benutzer zugewandter Abschnitt der Tischplatte als verschwenkbares Plattensegment ausgebildet ist;
- Figur 18: eine ähnliche Ansicht wie Figur 17, wobei jedoch das verschwenkbare Plattensegment kürzer ist;
- Figur 19: eine perspektivische Ansicht eines Schreibtisches, der mit einem hinteren verschwenkbaren Plattensegment zum Verschließen eines gestreckten Ablageraumes versehen ist und ferner zwei seitliche verschwenkbare Plattensegmente aufweist, über welche seitliche Ablageräume der Zarge zugänglich sind;
- Figur 20: eine ähnliche Ansicht wie Figur 19, wobei statt eines langen sich über die gesamte Tischbreite erstreckbaren hinteren Plattensegmentes drei einzeln verschwenkbare Plattensegmente vorgesehen sind, die einen mittleren Bereich bzw. den seitlichen Bereichen des hinteren Tischbereiches zugeordnet sind;
- Figur 21: eine perspektivische Ansicht eines tiefen, quadratischen Schreibtisches mit einem einem mittleren Tischbereich zugeordneten verschwenkbaren Plattensegment;
- Figur 22: eine vergrößerte auseinandergezogene perspektivische Ansicht des Eckbereiches eines Tisch-Unterbaus; und

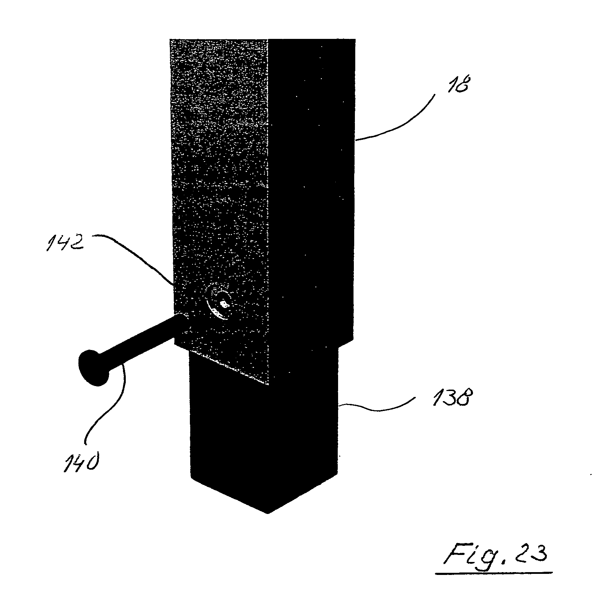

- Figur 23: eine vergrößerte perspektivische Ansicht eines Verstellfußes, der mit den Tischen nach den Figuren 1 bis 22 verwendbar ist.

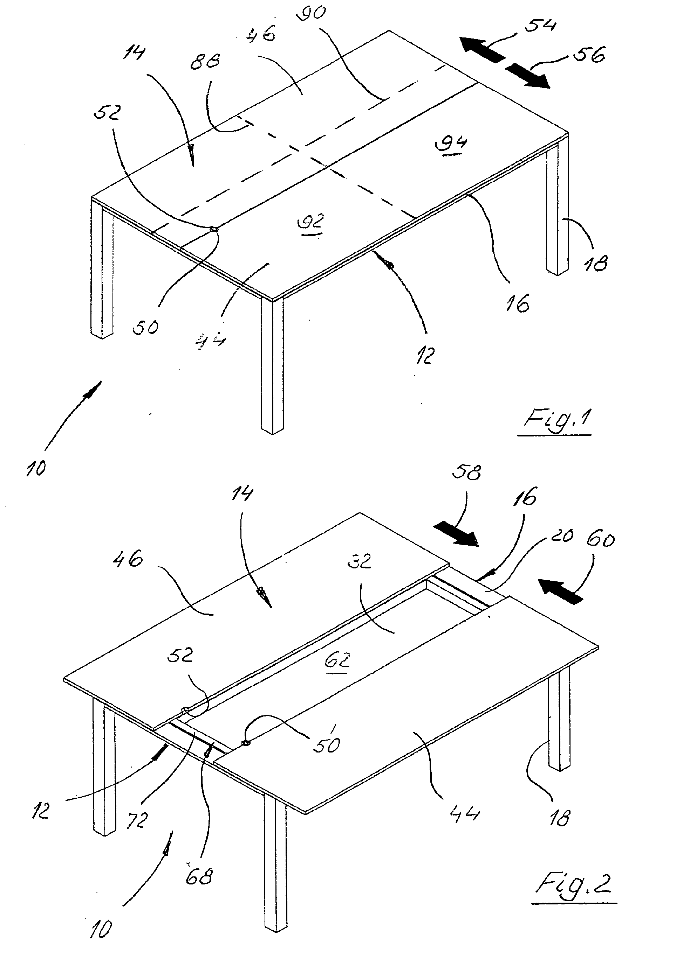

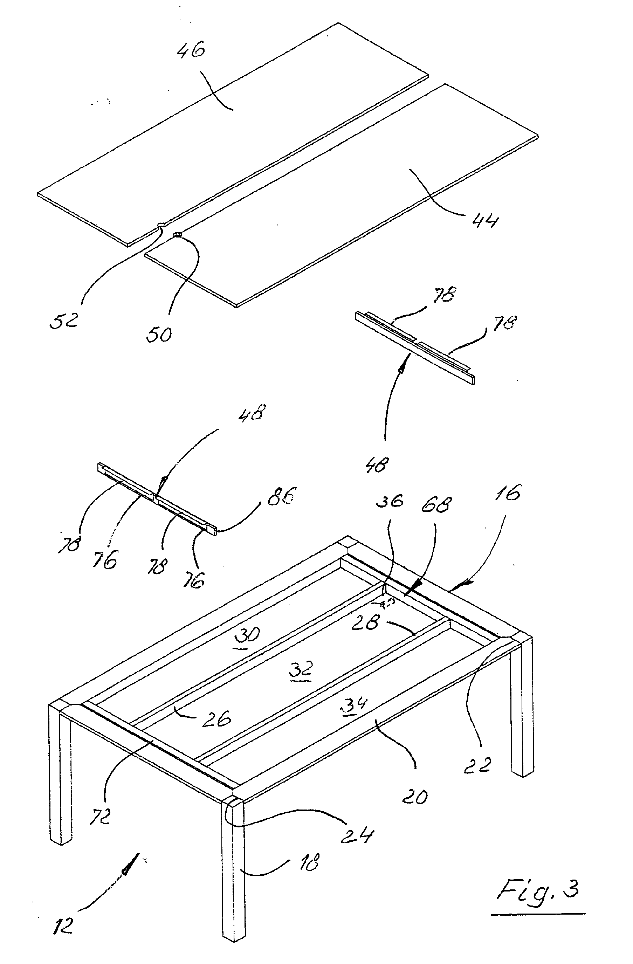

In den Figuren 1 bis 3 ist mit 10 insgesamt ein Schreibtisch bezeichnet, der einen insgesamt mit 12 bezeichneten Unterbau und eine von diesem getragene insgesamt mit 14 bezeichnete Tischplatteneinheit aufweist.

Der Unterbau 12 umfasst eine insgesamt mit 16 bezeichnete Zarge sowie vier an deren Ecken befestigte Füße 18. Die Zarge 16 besteht aus einzelnen Holmen 20, die durch ein extrudiertes Material, vorzugsweise aus Aluminium oder einer Aluminiumlegierung hergestellt sind.

Die Holme 20 sind an ihren Enden auf 45° auf Gehrung geschnitten, wobei durch einen transversalen Schnitt 22 die Spitzen der Holme so abgenommen sind, daß man bei auf Gehrung zusammengesetzten Holmen 20 an den Ecken jeweils eine quadratische Aufnahme 24 erhält, in welcher ein oberer Endabschnitt eines Fußes 18 Aufnahme findet.

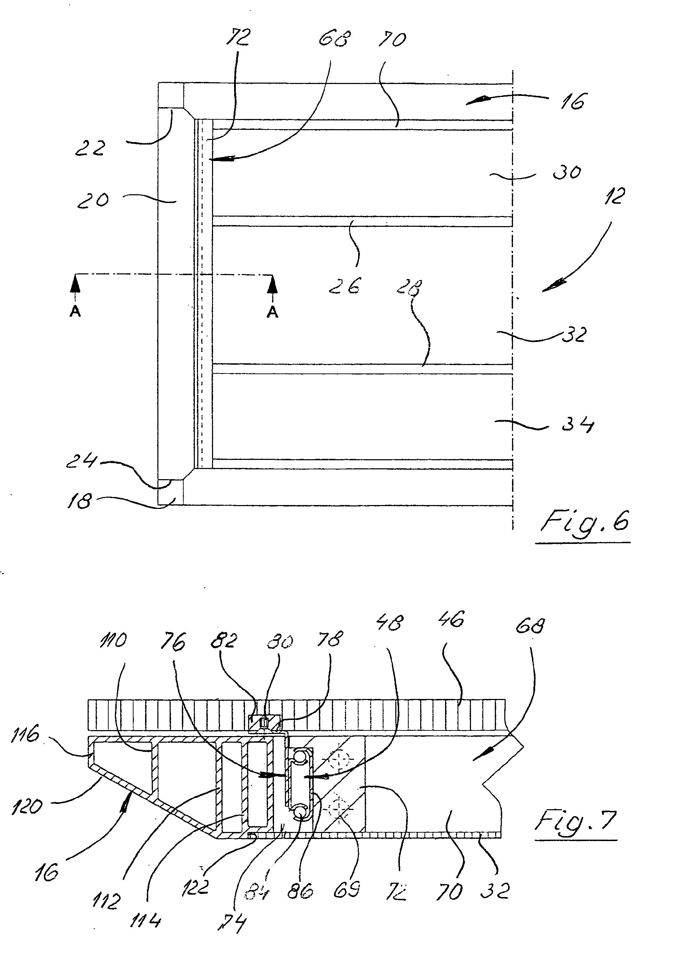

Einzelheiten des Zargenaufbaues werden später unter Bezugnahme auf Figuren 6, 7 und 22 noch erläutert.

Zwischen denjenigen Holme 20, welche die Schmalseiten der Zarge 16 bilden, verlaufen zwei symmetrisch zur Zargenmitte verlaufende Tragprofile 26, 28, deren Stirnflächen jedoch von den Innenseiten dieser Holme beabstandet sind, wie noch genauer beschrieben werden wird.

Die Unterseite der Zarge ist durch Bodenplatten 30, 32, 34 verschlossen, die auf die Unterseite der Zarge aufgeschraubt sind oder auf Schultern der Holme 20 und der Tragprofile 26 aufgelegt sind, welche bei deren unteren Enden ausgebildet sind, wie bei 36 angedeutet.

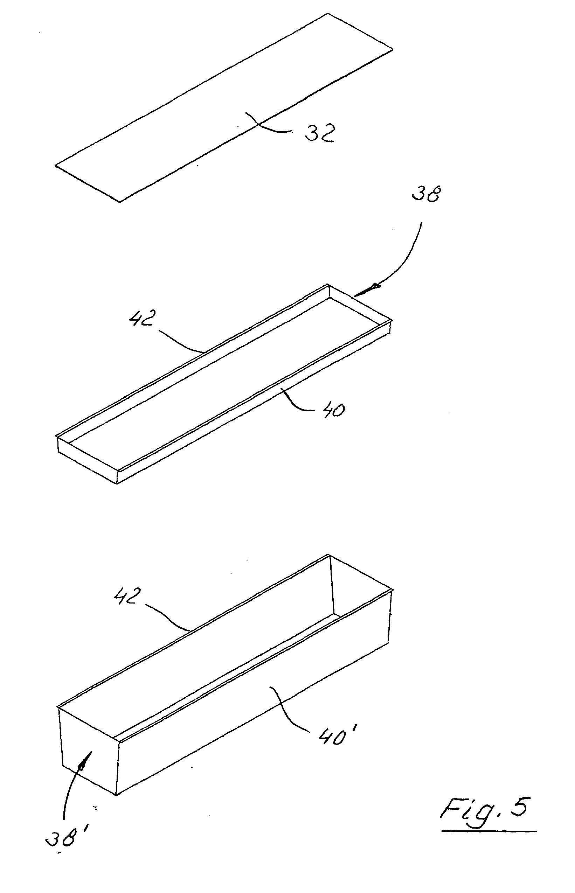

Wahlweise können die Bodenplatten auch Teil von Ablagewannen 38 sein, wie sie in Figur 5 dargestellt sind. Diesen Ablagebwannen ist gemeinsam, daß sie eine in Aufsicht rechteckige Randwand 40 aufweisen, wobei die Längsseiten der Randwand 40 am oberen Ende mit nach außen kragenden Auflageflanschen 42 versehen sind.

Die Tischplatteneinheit 14 umfasst zwei Plattensegmente 44, 46 gleicher Größe, die in einer in Figur 1 gezeigten Arbeitskonfiguration die Oberseite des Unterbaus 12 bündig verschließen.

Die Plattensegmente 44, 46 sind über Synchronmechaniken 48 mit der Zarge 16 verbunden. Die Synchronmechaniken 48 führen einerseits die Plattensegmente 44, 46 in zu einer Schmalseite des Schreibtisches 10 parallelen Richtung verschiebbar, wobei das Ausmaß der Verschiebung durch ein mechanisches Koppelgetriebe gleich groß gehalten wird.

Derartige Synchronmechaniken können z. B. zwei in vertikaler Richtung versetzte Verlängerungen der mit den Tischplattensegmenten verbundenen Beschlagteile der Synchronmechaniken 48 aufweisen, die bewegungsmäßig durch ein Reibrad gekoppelt sind, welches an der Unterseite der einen Verlängerung und der Oberseite der anderen Verlängerung angreift und an dem Zargenholm gelagert ist. Falls gewünscht, kann man diese Reibrad-Kopplung auch durch eine Zahnrad-Kopplung ersetzen, welche Zahnstangen umfassen, die auf den Verlägerungen der mit den Plattensegmenten verbundenen Beschlagteile ausgebildet sind, und ein Zahnrad, welches die beiden Zahnstangen miteinander verbindet.

Um die beiden Plattensegmente 44, 46 in der in Figur 1 gezeigten Arbeitsstellung (Schließstellung) verriegeln zu können, haben die beiden benachbarten Kanten der Plattensegmente 44, 46 fluchtende halbkreisförmige Ausnehmungen, in denen zusammenarbeitende Schlossteile 50, 52 angeordnet sind. Vorzugsweise erfolgt das Entriegeln des Schlosses durch Nachunten-Drücken einer oberen Betätigungsplatte des Schlossteiles 52, die in eine zur Oberseite des Plattensegmentes 44 bündige Schließstellung vorgespannt ist.

Ähnliche halbkreisförmige Ausnehmungen können auch vorgesehen werden, um Kabel zur Oberseite der Tischplatte durchzuführen.

Der Benutzer kann die beiden Plattensegmente 44, 46 entweder dadurch auseinanderfahren, daß er das vordere Plattensegment 44 zu sich herzieht, wodurch das äußere Plattensegment 46 automatisch von ihm wegbewegt wird, oder er kann auch das Plattensegment 46 von sich wegdrücken, wodurch das vordere Plattensegment 44 automatisch auf ihn zugefahren wird.

Die Bewegung der Plattensegmente 44, 46 beim Öffnen ist in Figur 1 durch die Pfeile 54, 56 angegeben.

Die Bewegung der Plattensegmente 44, 46 zum Schließen der Tischplatteneinheit 14 ist in Figur 2 durch Pfeile 58, 60 angedeutet.

Bei geöffneter Tischplatteneinheit ist für den Benutzer ein Ablageraum 62 zugänglich, der durch die Zarge 16 und die Bodenplatte 32 begrenzt ist.

Zieht man in Betracht, daß auch tiefere Ablageräume 62 im Schreibtisch benötigt werden, so wird die Bodenplatte 32 ggf. schon in der Fabrik weggelassen oder abmontiert und statt ihrer eine flache Ablagewanne 38 eingesetzt, wie sie in Figur 5 gezeigt ist. An die oberen Enden zweier gegenüberliegender ihrer Randwände sind Tragflansche 66 angeformt.

Die Ablagewanne 38 kann dann durch eine tiefere Ablagewanne 38' ersetzt werden, die ebenfalls in Figur 5 gezeigt ist.

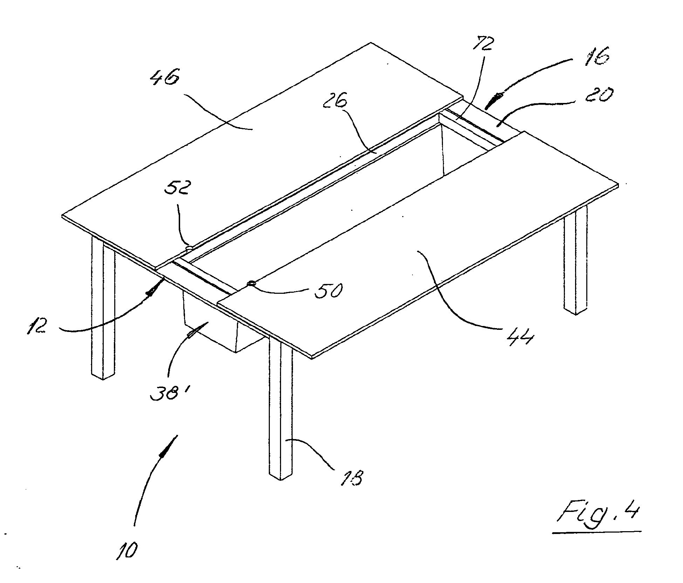

Man erhält dann einen Schreibtisch, wie er in Figur 4 dargestellt ist.

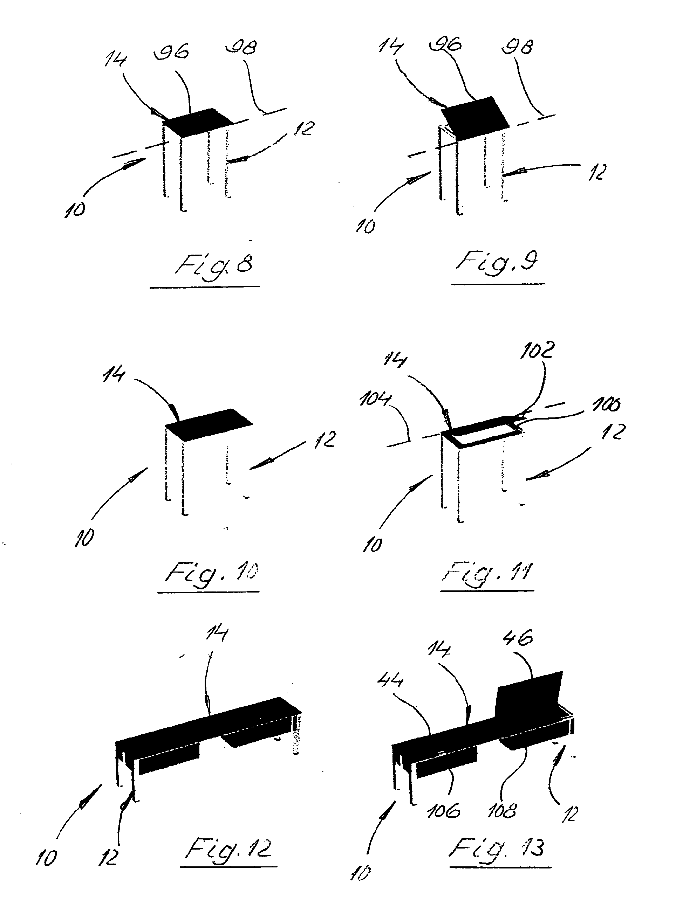

Wie aus den Figuren 6 und 7 ersichtlich, sind die Tragprofile 26, 28 nicht direkt an den Innenflächen der Querholme der Zarge 16 befestigt, sondern an einem Hilfsrahmen 68 angebracht, der seinerseits mit der Zarge 16 verbunden, z. B. verschraubt (69, Figur 7) ist.

Der Hilfsrahmen 68 hat Längsholme 70 und Querholme 72, die von den Innenflächen der Zargen-Querholme beabstandet sind, so daß sich hierzwischen ein in Schmalseiten Richtung des Tisches verlaufender Kanal 74 ergibt, in welcher jeweils eine der Synchronmechaniken 48 Aufnahme findet. Der Kanal 74 ist nach oben offen, so daß zwischen der Außenseite eines Querholmes 72 und der Innenseite des benachbarten Holmes 20 der Zarge 16 ein Schlitz verbleibt, der sich über die gesamte Tiefe des Tisches erstreckt.

Wie aus Figur 7 ersichtlich, hat jede der Synchronmechaniken 48 eine aus Blech gebogene bewegliche U-Profil aufweisende Schiene 76, deren Außenseite ein um 90° abgekantetes Befestigungsteil 78 trägt, dessen vertikaler Schenkel sich durch den oben angesprochenen Schlitz erstreckt und dessen oberer horizontaler Schenkel über Schrauben 80 mit Gewindeinserts 82 verbunden ist, die fest in die Unterseite des zugeordneten Plattensegmentes 44 bzw. 46 eingelassen sind.

Kurze Schenkel der Schiene 76 sind kreisbogenförmig gestaltet und dienen als Lauffläche für Kugeln 84. Letztere arbeiten ferner mit bogenförmigen Schenkeln einer Führungsschiene 86 zusammen, welche das feststehende Teil der Synchronmechanik 48 darstellt und fest mit dem benachbarten Querholm 72 des Hilfsrahmens 68 verbunden ist.

Die beiden beweglichen Schienen 76 derjenigen Synchronmechaniken 48, die derselben Tischseite zugeordnet sind, sind in der weiter oben beschriebenen Art und Weise mechanisch so miteinander zwangsgekoppelt, daß sich die beiden Schienen 76 der Synchronmechaniken 48 und damit auch die beiden Plattensegmente 44, 46 nur um entgegengesetzt gleich große Beträge verschieben lassen.

Bei dem oben beschriebenen Ausführungsbeispiel entsprach die Trennlinie zwischen den beiden Plattensegmenten 44, 46 der Längs-Mittellinie der Schreibtischfläche, und beide Plattensegmente 44, 46 wurden zum Öffnen des Ablageraumes 62 auf gleiche Beträge nach außen bewegt.

Für manche Anwendungsfälle kann es sinnvoller sein, die Teilungslinien zwischen den beiden Plattensegmenten auf der Quer-Mittellinie der Schreibtischfläche vorzusehen. Diese Variante ist in Figur 1 durch die gestrichelte Linie 88 angedeutet. Die Plattensegmente 44 und 46 werden dann in LÄngsrichtung des Tisches bewegt.

Für wiederum andere Anwendungsfälle kann es vorteilhaft sein, auf eine mechanische Zwangskupplung zweier Plattensegmente zu verzichten und nur unabhängig verschiebbare Plattensegmente vorzusehen.

Auch braucht die Trennlinie zwischen den Plattensegmenten 44, 46 auch nicht bei der Längs-Mittellinie oder Quer-Mittellinie der Schreibtischfläche zu liegen; man kann auch eine außermittige Trennlinie wählen, wie in Figur 1 bei 90 angedeutet. Derartige außermittige Trennlinien empfehlen sich insbesondere dann, wenn tiefe Ablagewannen wie die Ablagewanne 66 verwendet werden.

Auch kann man ein Plattensegment in sich wieder in Untersegmente zerlegen.

So könnte man bei dem Tisch 10 von Figur 1 das hintere Plattensegment 46, wie unter Bezugnahme auf Figur 1 beschrieben, parallel zur Schmalseite des Schreibtisches bewegbar belassen, während man das vordere Plattensegment 46 in zwei Untersegmente 92, 94 unterteilt, die an der Linie 88 zusammenstoßen und jeweils parallel zur Längskante des Schreibtisches verlagerbar sind.

Es versteht sich, daß der Hilfsrahmen 68 dann, wenn man unter den Untersegmenten der Plattensegmente getrennte Ablagewannen wünscht, ggf. mit geeigneten weiteren Tragholmen zu versehen ist.

Sind die Plattensegmente 44, 46 oder deren Untersegmente 92, 94 nicht über eine Synchronmechanik 48 zur gemeinsamen entgegengesetzten Bewegung gekoppelt, kann man den Schreibtisch auch dann verwenden, wenn eine oder zwei seiner Seiten bei einer Wand stehen.

Einen Zugang zum Ablageraum 62 ohne Vergrößerung der lichten Aufsichts-Randkontur des Schreibtisches kann man dadurch erhalten, daß man Plattensegmente vorsieht, die um eine in der Schreibtischfläche liegende Achse verschwenkbar sind.

Entsprechende Schreibtischvarianten werden nachstehend unter Bezugnahme auf die Figuren 8 bis 21 beschrieben. Dabei werden Komponenten, die von der Funktion her solchen Komponenten entsprechen, die obenstehend unter Bezugnahme auf die Figuren 1 bis 7 schon erläutert wurden, wieder mit denselben Bezugszeichen versehen, auch wenn sie sich in ihrer Geometrie unterscheiden. Soweit diese Tische Plattensegmente der Tischplatteneinheit 14 enthalten, die nicht explizit angesprochen sind, handelt es sich um festehende Plattensegmente.

Die Figuren 8 und 9 zeigen einen zum Arbeiten im Stehen geeigneten Schreibtisch, welcher eine einzige Tischplatte 96 aufweist, die um eine mit der Längsseite der Schreibtischfläche zusammenfallende Achse 98 verschwenkbar ist. Dabei zeigt Figur 8 den geschlossenen Zustand der Tischplatte 96, Figur 9 den offenen Zustand, in welchem ein Zugang zum durch die Zarge 16 begrenzten Ablageraum 62 gegeben ist.

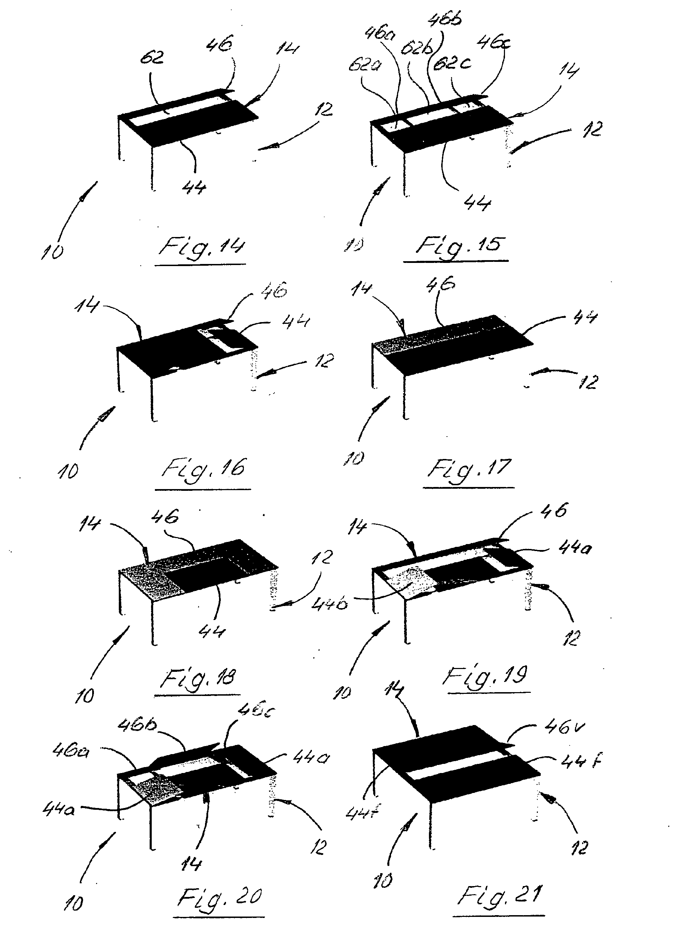

Figuren 10 und 11 zeigen einen ähnlichen, etwas größeren Schreibtisch, bei welchem die Tischplatteneinheit 14 ein äußeres U-förmiges Plattensegment 100 aufweist, welches fest mit der Zarge 16 verbunden ist, und ein inneres Plattensegment 102, welches verschwenkbar an der Zarge 16 angebracht ist, wobei nun die Schwenkachse 104 auf der vom Benutzer abgewandten, hinteren Längsseite der Tischfläche liegt.

Die Figuren 12 und 13 zeigen einen Schreibtisch 10, der mit zwei seitlichen tiefen Ablagewannen 106, 108 versehen ist, die im linken bzw. rechten Abschnitt des Schreibtisches liegen. Ein Zugang von oben zu den Ablagewannen 106, 108 besteht über zwei verschwenkbare Plattensegmente 44, 46 der Tischplatteneinheit, deren Schwenkachse bei der hinteren Längskante der Schreibtischfläche liegt.

Figur 14 zeigt einen Schreibtisch 10, bei welchem ein einziges verschwenkbares Plattensegment 46 mit bei der hinteren Längskante der Schreibtischfläche liegenden Verschwenkachse einen Zugang zu einem in Längsrichtung des Schreibtisches verlaufenden Ablageraums 62 freigeben kann.

Beim Ausführungsbeispiel nach Figur 15 ist der Ablageraum 62 in drei Abschnitte 62a, 62b und 62c unterteilt, und das hintere Plattensegment 46 ist entsprechend in drei unabhängig verschwenkbare Plattensegmente 46a, 46b und 46c unterteilt, die getrennt geöffnet werden können.

Beim Schreibtisch nach Figur 16 hat man ein vorderes verschwenkbares Plattensegment 44, dessen Schwenkachse in der rechten Querkante der Schreibtischfläche liegt, und ein hinteres verschwenkbares Plattensegment 46, dessen Schwenkachse in der Hinterkante der Schreibtischfläche liegt.

Das Ausführungsbeispiel nach Figur 17 hat ein vorderes verschwenkbares Plattensegment 44, welches breiter ist als ein hinteres feststehendes Plattensegment 46, und die Schwenkachse des vorderen Plattensegmentes 44 liegt an der Stoßstelle zwischen den beiden Plattensegmenten 44, 46.

Der Schreibtisch nach Figur 18 hat ein hinteres U-förmiges Plattensegment 46, welches feststehend ist, und ein vorderes, in das hintere Plattensegment eingepaßtes Plattensegment 44, welches um eine Achse verschwenkbar ist, die bei seinem hinteren Rand liegt.

Der Schreibtisch nach Figur 19 hat ein hinteres Plattensegment 46, welches um seine hintere Längskante verschwenkbar ist, und zwei vordere seitliche Plattensegmente 44a, 44b, deren Schwenkachse jeweils bei ihrer Außenkante liegt.

Figur 20 entspricht weitgehend Figur 19, nur sind der hintere Ablageraum und das hintere Plattensegment dreifach unterteilt.

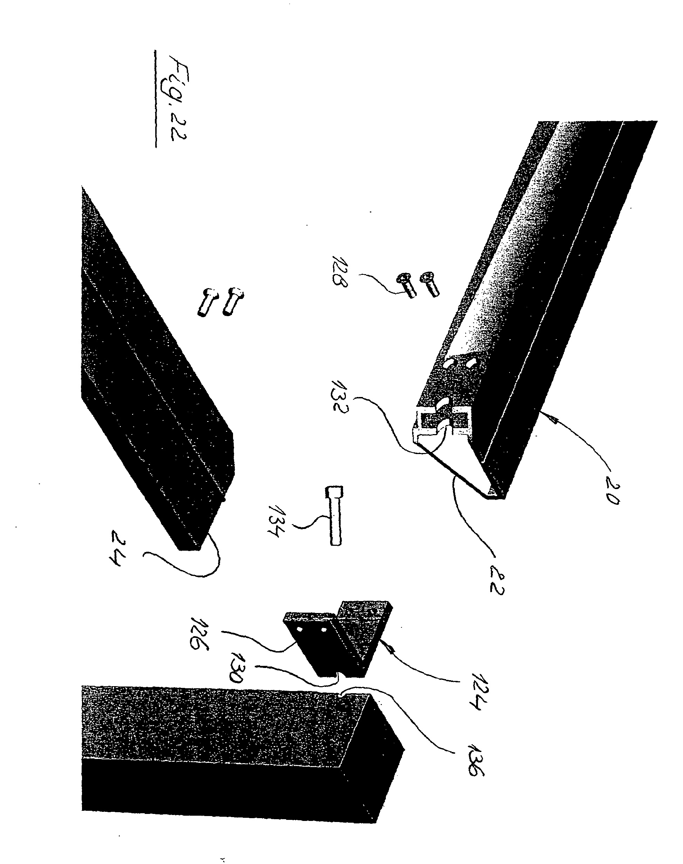

Figur 21 zeigt einen quadratischen Arbeitstisch, bei dem ein mittlerer Ablageraum durch eine verschwenkbares Plattensegment 46v zugänglich ist, zu dessen beiden Seiten zwei festehende Plattensegmente 44f vorgesehen sind.

Bei den oben beschriebenen Ausführungsbeispielen wurden entweder verschiebbare Plattensegmente oder verschwenkbare Plattensegmente verwendet. Es versteht sich, daß bei einem Schreibtisch auch ein Teil der Plattensegmente verschiebbar, ein anderer Teil der Plattensegmente verschwenkbar sein kann.

Die Holme der Zarge 16 sind vorzugsweise durch Ablängen eines Endlos-Profilmateriales erhalten, welche ein Stahlprofil, vorzugsweise aber ein Leichtmetallprofil ist.

Wie aus Figur 7 ersichtlich, kann dieses Profil parallele innere Stege 110, 112, 114 aufweisen, um die mechanische Belastbarkeit zu erhöhen.

Vorzugsweise ist eine Vorderwand 116 des Profiles mit einer Bodenwand 118 über eine schräge Zwischenwand 120 verbunden, so daß der Benutzer, wenn er gegen die Unterseite der Zarge 16 stößt, keine scharfe Kante verspürt.

Die Bodenwand 118 des Profiles ist abgetreppt, wie bei 122 dargestellt, wobei die Höhe dieser Stufen entsprechend der Dicke der Bodenplatten 30, 32, 34 gewählt ist.

Diese Ausbildung der Zargenprofile erlaubt es, wie in Figur 22 gezeigt, die Zargenholme an den Ecken einfach durch ein Winkelteil 124 miteinander zu verbinden, welches mit seinen einen Winkel von 90° einschließenden Armen 126 in die am weitesten innen liegende Kammer der Zargenholme formschlüssig eingreift und dort mittels Schrauben 128 fixiert ist.

Am Winkel sind das Winkelteil 124 mit einer Durchgangsöffnung 130 und die Zarge 16 mit einer Durchgangsbohrung 132 versehen, durch welche eine Schraube 134 hindurchgeführt wird, die mit einer Gewindebohrung 136 im oberen Ende eines Fußes 18 zusammenarbeitet. Auf diese Weise lassen sich die Füße 18 kippsicher und fest und trotzdem lösbar an der Zarge 16 befestigen.

Die Füße 18 können ihrerseits aus einem Profilmaterial hergestellt sein, welches am oberen Fußende zugeschweißt oder durch eine Kappe verschlossen ist. Am unteren Ende eines solchen Fußes kann man ein etwas kleineres Profilteil 138 im Gleitspiel in den Fuß 18 einsetzen und dort in unterschiedlicher Höhe unter Verwendung einer Schraube 140 verriegeln, die mit einer einer Vielzahl vertikal beabstandeter Gewindebohrungen 142 des unteren Profilteiles 138 zusammenarbeiten kann.

Auf diese Weise läßt sich die Tischhöhe den Wünschen eines Benutzers anpassen.

## Patentansprüche

1. Tisch mit einem Unterbau (12), der eine Zarge (16)
und Füße (18) umfasst, und mit einer Tischplatteneinheit (14), welche von dem Unterbau (12) getragen ist, **dadurch gekennzeichnet, daß** die Zarge (16) einen Ablageraum (62) begrenzt und daß die Tischplatteneinheit (14) mindestens ein Plattensegment (44, 46) aufweist, welches zwischen einer Schließstellung, in welcher es zusammen mit den restlichen Abschnitten der Tischplatteneinheit (12) eine durchgehende Arbeitsfläche bildet, und einer Offenstellung bewegbar ist, in welcher ein Zugang zum Ablageraum (62) von oben freigegeben wird.

2. Tisch nach Anspruch 1, **dadurch gekennzeichnet, daß**
mindestens ein bewegbares Plattensegment (44, 46) in der Ebene der Tischplatteneinheit (12) verschiebbar ist.

3. Tisch nach Anspruch 2, **dadurch gekennzeichnet, daß**
die Tischplatteneinheit (12) zwei Plattensegmente (44, 46) aufweist, die in der Tischplattenebene verschiebbar sind.

4. Tisch nach Anspruch 3, **dadurch gekennzeichnet, daß**
die beiden Plattensegmente (44, 46) zur Bewegung in entgegengesetzter Richtung zwangsgekoppelt sind.

5. Tisch nach Anspruch 4, **dadurch gekennzeichnet, daß**
die beiden Plattensegmente (44, 46) um gleiche Beträge in entgegengesetzter Richtung verschiebbar gekoppelt sind.

6. Tisch nach Anspruch 5, **dadurch gekennzeichnet, daß**
die Tischplatteneinheit (12) mindestens ein Plattensegment (44, 46) aufweist, welches um eine in der Ebene der Tischplatteneinheit (14) liegende Achse verschwenkbar ist.

7. Tisch nach Anspruch 6, **dadurch gekennzeichnet, daß**
die Schwenkachse des verschwenkbaren Plattensegmentes (44, 46) parallel zu einer der Randkanten der Tischplatteneinheit (14) verläuft.

8. Tisch nach Anspruch 6 oder 7, **dadurch gekennzeichnet, daß** die Tischplatteneinheit (14) eine Mehrzahl von Plattensegmenten (44, 46) aufweist, die um parallele Schwenkachsen in gleichem Drehsinne verschwenkbar sind.

9. Tisch nach einem der Ansprüche 1 bis 8, **dadurch**
**gekennzeichnet, daß** die Zarge (16) eine außenliegende Wand (120) aufweist, die schräg nach unten und innen geneigt ist.

10. Tisch nach einem der Ansprüche 1 bis 9, **dadurch**
**gekennzeichnet, daß** die Zarge (16) Holme (20) aufweist, die aus einem extrudierten Profilmaterial hergestellt sind.

11. Tisch nach Anspruch 10, **dadurch gekennzeichnet,**
**daß** das Profilmaterial eine Mehrzahl in horizontaler Richtung nebeneinanderliegend verlaufender Zwischenwände (110, 112, 114) aufweist.

12. Tisch nach einem der Ansprüche 1 bis 11, **dadurch**
**gekennzeichnet, daß** die Zarge (16) in ihrer unteren Begrenzungsfläche bei deren innerem Rand eine Stufe (122) aufweist, in welcher eine entsprechende Höhe aufweisende Bodenplatte (30, 32, 34) Aufnahme findet.

13. Tisch nach Anspruch 12, **dadurch gekennzeichnet,**
**daß** mindestens eine Bodenplatte (30, 32, 34) direkt mit der Unterseite der Zarge (16) verbunden ist.

14. Tisch nach einem der Ansprüche 1 bis 13, **dadurch**
**gekennzeichnet, daß** der Ablageraum (62) durch eine Ablagewanne (38) begrenzt ist, die an der Zarge (16) lösbar eingehängt ist, vorzugsweise mittels eines Tragflansches (42), der am oberen Ende der Wannen-Randwand (40) ausgebildet ist.

15. Tisch nach einem der Ansprüche 1 bis 14, **dadurch**
**gekennzeichnet, daß** ein oberer Endabschnitt der Füße (18) in einer Eckausnehmung (24) der Zarge (16) Aufnahme findet, wobei die Enden der Holme (20) der Zarge (16) vorzugsweise auf Gehrung geschnitten sind.

16. Tisch nach Anspruch 15, **dadurch gekennzeichnet,**
**daß** die Holme (20) der Zarge (16) in ihrem Inneren, außerhalb der Eckausnehmung (24) liegenden Abschnitt durch ein abgewinkeltes Verbindungsteil (124) miteinander verbunden sind.
